# EUROPEAN PATENT SPECIFICATION

(11) **EP 3 189 953 B1**
(45) Date of publication and mention of the grant of the patent: **03.06.2020**
(21) Application number: 17150271.9
(22) Date of filing: 04.01.2017
(51) Int. Cl.: B29C 44/56, B29C 44/42, B29K 105/04, B29L 31/00, B29K 25/00

(54) **METHOD AND APPARATUS FOR COATING PRODUCTS AND COATED PRODUCTS**
VERFAHREN UND VORRICHTUNG ZUR BESCHICHTUNG VON PRODUKTEN UND BESCHICHTETE PRODUKTE
PROCÉDÉ ET APPAREIL DE REVÊTEMENT DE PRODUITS ET PRODUITS REVÊTUS

(30) Priority: 05.01.2016 NL 2016056
(43) Date of publication of application: 12.07.2017
(73) Proprietor: PaperFoam Holding B.V., 3771 ND Barneveld (NL)
(72) Inventor: de Graaff, Marijke, 3771 ND Barneveld (NL); Huisman, Jan Wietze, 3771 ND Barneveld (NL)
(74) Representative: V.O.

(56) References cited:
- EP-A1- 1 160 524
- EP-A1- 1 777 065
- EP-A2- 1 127 914
- GB-A- 2 418 409
- US-A- 4 911 978
- US-A- 5 776 388
- US-A- 6 106 449

## Description

The invention relates to a method for coating a product. The invention further relates to products coated and an apparatus and foil or laminate for coating products. The invention especially relates to such methods, apparatus or products wherein the product coated comprises at least a wall part having an at least partly open cell structure.

Products having a cell structure such as an at least partly open cell structure in at least part of a wall are known from the art. Such products are for example known from for example WO96/30186 or WO98/13184. Such products are produced and marketed under the name of PaperFoam®, a registered name of PaperFoam BV, Barneveld, The Netherlands. In these known methods a suspension of at least a natural polymer such as starch in a fluid, such as water, is gelatinized and then baked in a mould at a temperature sufficient to form a network of said natural polymers, wherein a blowing agent is used for forming a partly open celled structure by said network. The blowing agent can for example be water in which the natural polymer is suspended or another blowing agent. Similarly such products can be obtained using other materials and other methods for forming the same, such as for example expanded plastics, such ass but not limited to EPS. In such the cells could be provided between mono- and/or polymer spheres or differently shaped mono- and/or polymer elements.

These products have an at least partly porous surface. Moreover at least the surface of such products may be susceptible to water or other fluids, may be prone to contamination and can be difficult to clean. Moreover such surfaces may be relatively soft and vulnerable to damage.

In WO00/39215 methods have been described for coating a surface of products having an at least partly open celled wall structure, such as known from but not limited to products as disclosed in for example WO96/30186 or WO98/13184. In this method a liquid coating is applied to a relevant surface area, which is then allowed to dry. The coating can for example be applied by spraying or dipping. This coating is relatively thin and may not be sufficiently resistant to external influences.

There is a need for a method and apparatus as well as a product for coating products having a wall which has at least a wall part having at least partly an cell structure. There is a need for a method and apparatus as well as a product for coating products having a wall which has at least a wall part having at least partly an open cell structure. There is furthermore a need for an alternative method for coating products. At least one of these goals is at least partly obtained by a method, product or apparatus or assembly according to this disclosure.

In an aspect a method for coating a product according to the disclosure can be characterized in that the product made of a suspension containing starch, which has been baked in a mould, heated such that the starch is at least gelatinized such that cross linking of at least natural polymers in the material is obtained. The product having a wall formed by at least a portion having at least partly a cell structure, at least one portion having an at least partly open cell structure. The wall part has a core with relatively large cells, enclosed between skin parts with relatively small cells. A foil or foil laminate is pressure formed over at least a part of at least one side of said wall, said foil or at least one layer of said laminate forming a coating of said part of the wall.

In an aspect this disclosure can be directed to a product, said product having a wall with at least partly a cell structure, especially an open cell structure, baked using a suspension of at least starch, such that cross linking of natural polymers of the suspension has occurred. The wall part has a core with relatively large cells, enclosed between skin parts with relatively small cells, and a coating made of a foil or laminate has been pressure formed over at least part of said open celled wall part, preferably pressed into inter cellular spaces between the cells and/or into the cells in the wall of the product.

In an aspect this disclosure can be characterized by an assembly for coating a product, comprising a product and a pressure forming unit, a mould or last and a foil or laminate. The product has a wall part having at least partly a cell structure, preferably at least partly an open cell structure, baked using a suspension of at least starch, such that cross linking of natural polymers of the suspension has occurred. The wall part has a core with relatively large cells, enclosed between skin parts with relatively small cells. The product fits in/and or on the last or mould, such that at least the part of the wall having at least partly the cell structure is supported by said last or mould. The pressure forming unit comprises a suction device for sucking air through and/or along said part of the wall having said cell structure and preferably through and/or along said last or mould supporting said wall portion.

EP1777065 discloses a method for coating a flat product using a foil. The product has a wall having an open cell structure. The wall is pressed from foamed starch pieces. A facing layer is pressure formed onto at least one side of said wall, forming a coating of said wall.

GB2418409 discloses an assembly suitable for coating a product.

In further elucidation of the present disclosure embodiments of methods, materials and products, as well as assemblies for use will be described, with reference to the drawings, which are only shown in elucidation and should not be understood as limiting the disclosure in any way.
Fig. 1 schematically shows in schematic cross section an apparatus for moulding a product, as known from the art;
Fig. 2A and B schematically shows two cross sections of a part of a wall of a product having a cell structure, prior to coating;
Fig. 3 schematically shows in cross section schematically a wall part of a product provided with a coating;
Fig. 4 schematically shows a perspective view of a product provided with a coating;
Fig. 5 - 8 schematically show different steps in the method of coating a product;
Fig. 9 schematically shows in perspective view an example of a product, shown as a clam shell type product;
Fig. 10 schematically shows in cross section a product, shown as a tray with compartments filled with seeds;
Fig. 11 schematically shows in side view a foil;
Fig. 12 schematically shows in side view a laminate; and
Fig. 13A and B schematically show an alternative embodiment.

These figures and examples of embodiments are disclosed by way of example only and should by no means be interpreted as limiting in any way or form. In these drawings and description the same or similar reference signs are used for the same or similar aspects of the disclosure.

In this description wording like substantially should be understood as meaning that slight variations on a value, dimension or other property it refers to should also be considered allowable. For example but not limited to variations or deviations of up to 25% or at least up to 20%, such as but not limited to variations or deviations of up to 15%, more specifically up to 10%, such as for example up to 5%.

In this description a top side or a bottom side of a product or foil or laminate should not be understood as limiting the relevant element to a specific orientation. In use a bottom side of a product may face down or up or in another direction, as may a bottom side. Bottom side and top side should be understood as at least meaning opposite sides of a product or foil or laminate.

Products according to this description may be, but are by no means limited to shells or trays, having an at least partly open side, a peripheral wall and a substantially closed side opposite the at least partly open side, such that it can hold materials and/or artefacts, preferably even if that material is for example granular or fluid.

Products according to the present disclosure are preferably but are not limited to products made using bio degradable and/or natural, recyclable material, such as starch based and/or natural fiber based materials. In advantageous embodiments the products can be made of a suspension containing starch, such as but not limited to potato or tapioca starch, which has been baked in a mould, such that the starch is at least gelatinized and preferably heated such that cross linking of at least natural polymers in the material is obtained. A blowing agent such as water can form air pockets or cells in said material, which can in part be open cells. Natural fibers can be provided in the material, increasing the materials strength. Preferably the material is brought into the mould as a suspension at a temperature close to or below the gelatinization temperature of the natural polymers, which allows for easy an relatively low pressure filling. After baking, i.e. after cross linking of the natural polymers preferably the wall of the products has at least partly a cellular structure. The structure can be a foamed structure. The cells could be closed cells and/or open cells. Methods for manufacturing such products are for example known from WO96/30186 or WO98/13184, which applications are owned by the same applicant and are incorporated herein by reference, as an example of such manufacturing method and suspensions that could be used for the manufacture. Such processes are for example used for injection moulding products in heated moulds. Such processes are for example used for the manufacture of PaperFoam® products. Alternatively the products could be made from a different material, for example from plastic, especially recycled plastic, such as but not limited to foamed materials such as for example but not limited to EPS.

In this description pressure forming should be understood as at least including but not limited to thermoforming and/or vacuum forming. Pressure forming can be understood as a method in which a foil or laminate is applied and/or shaped by applying heat and/or pressure to the foil, especially a pressure difference on opposite sides of the foil or laminate, in order to apply the foil or laminate to a surface and/or shape the foil or laminate. Traditionally pressure forming, especially vacuum and/or thermo forming is used for forming three dimensional products such as cups, trays and the like, which are self supporting, by plastically deforming a flat sheet of foil or laminate into the desired shape using a last or mould which is pressed into the foil or laminate when heated to a plastifying temperature, and is removed after cooling. During such procedure in vacuum forming air can be sucked through the last or mould, from between the mould or last surface and the heated foil or laminate, creating an under pressure or vacuum there between relative to the surrounding pressure and thus drawing the foil or laminate over and into close contact with the surface of the mould or last. After cooling the mould or last is removed and the product has obtained the desired shape. In the present disclosure methods and apparatus are disclosed in which a foil or laminate is pressure formed, for example thermoformed and/or vacuum formed, onto a product as mould or last, such that after said pressure forming the foil or laminate stays on the product and is preferably intimately connected to the product or part thereof.

In this description a laminate should be understood as meaning a composite of at least two superimposed, interconnected layers of plastic, such as plastic foils, films or sheets. A laminate may for example be coextruded or formed by adhering two or more layers of foil or film to each other.

Products according to this disclosure can be used for for example packaging of articles, such as electronics, medicines, medical appliances and the like, but also for example as a product for packaging perishable goods, food, agricultural products and the like. The disclosure is however not limited to such products.

In this description products and methods shall be described in which the products are made at least in part using a biodegradable material, such as a starch based material. Biodegradable materials or products can be understood as meaning at least materials or products which are compostable, domestic or industrial, recyclable with paper and/or bio material based. Moreover disclosed are, by way of example, products having relatively thin walls with a cellular structure, which may have a closed cell configuration or an open cell configuration or a combination of both. By way of example products made of PaperFoam® are disclosed, made using for example a method and apparatus known from WO96/30186 or WO98/13184 as mentioned. It should however be clear that the disclosure is not limited to such products. They may be made of other materials, such as non-biodegradable materials, they may have different configurations and they can have different wall structures, preferably at least partly porous. Such as for example foamed plastic having a partly open structure, meaning that air can pass through it.

By way of example only embodiments of products and assemblies, as well as methods according to the description shall be discussed hereafter with reference to the drawings.

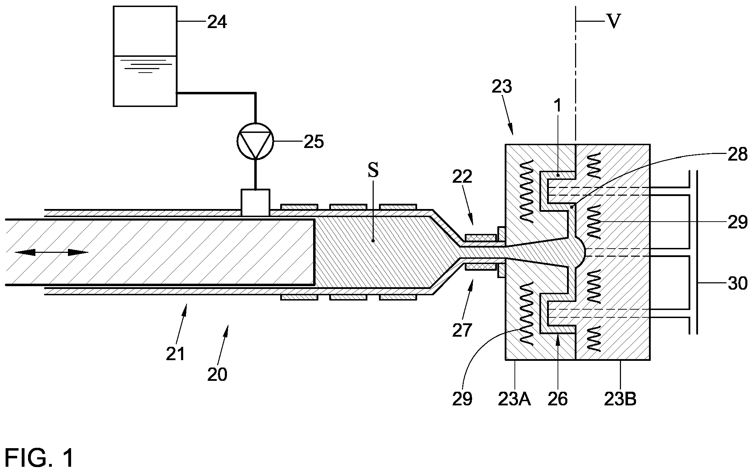

Fig. 1 shows schematically an injection-moulding apparatus 20 for use with a method according to the invention, together with a mould suitable for the manufacture of a product 1 according to the disclosure prior to providing a coating, as will be described.

The injection-moulding apparatus 20 comprises a supply device 21 for a batter S, a nozzle 22 and a mould 23. The batter S is for instance supplied from a storage tank 24 utilizing a pump 25.

Provided in the mould 23 are a number of mould cavities 26, two of which are depicted. Different numbers of mould cavities can be provided, which are identical or different. The mould cavities 26 are connected to a gate 27 via mould channels 28. Connecting to the or each mould cavity 26 are one or more deaeration channels which are in communication with the environment. This communication is preferably free, but may also be adapted to be shut off, for instance by a pressure relief valve. The mould 23 has mould parts 23A, B and is suitably divisible along a plane V which intersects the or each mould cavity 26, in such a manner that products 1 formed in the or each mould cavity 26 can be simply removed therefrom. The mould 23 is entirely and/or locally heated utilizing heating means 29 incorporated therein.

The mould 23 may contain different heating means 29, which can for example be electric heating elements. It is noted that the mould parts 26A, B can also be heated indirectly. The temperature of the different heating elements 29 is preferably controllable individually, but several or all heating elements 29 may also be coupled. In addition, the mould 23 can be heated externally from one or more sides, for instance electrically or by steam or gas burners. Through the heating elements 29 and optional other means, the temperature of the mould 23 can be raised in such a manner that in the/each mould cavity 26 during use, as desired, at all times and at all points the desired high baking temperature is achieved and maintained.

The injection-moulding apparatus 20 can be used as follows.

The mould parts 23A, B are clamped against each other and an amount of batter S is pressed into the mould 23 and into the mould cavities 26 under pressure. In the mould cavities 26 the batter S is brought to the desired temperature, and maintained at that temperature for a "baking time" of, for instance, 2 minutes. As a result, gelatinization and subsequent cross-linking of the (natural) polymers occurs. In addition, the strongly heated water and/or other liquids evaporate from the batter, giving rise to the formation of bubbles. In the batter, bubbles are formed which are partly encapsulated by the cross-linked structure. This yields a foam structure, which can be further enhanced by adding extra blowing agent. In order to allow substantially all of the evaporating moisture to escape from the mould 23, a sufficiently large number of vents or aeration channels are provided. After the baking time, the mould 23 is opened and the products 1 are taken from the mould cavities 26 or pushed out of them using ejectors 30.

Upon sufficient heating of the suspension at least above the gas formation or vaporization temperature of the or a blowing agent, within the suspension gelatinization of the starch occurs and moreover bubble formation as a result of evaporation of the water. Upon further heating of the suspension, cross-linking of the polymers occurs, yielding a firm, relatively dense structure around cells that result from the evaporation of the water and optional other blowing agents.

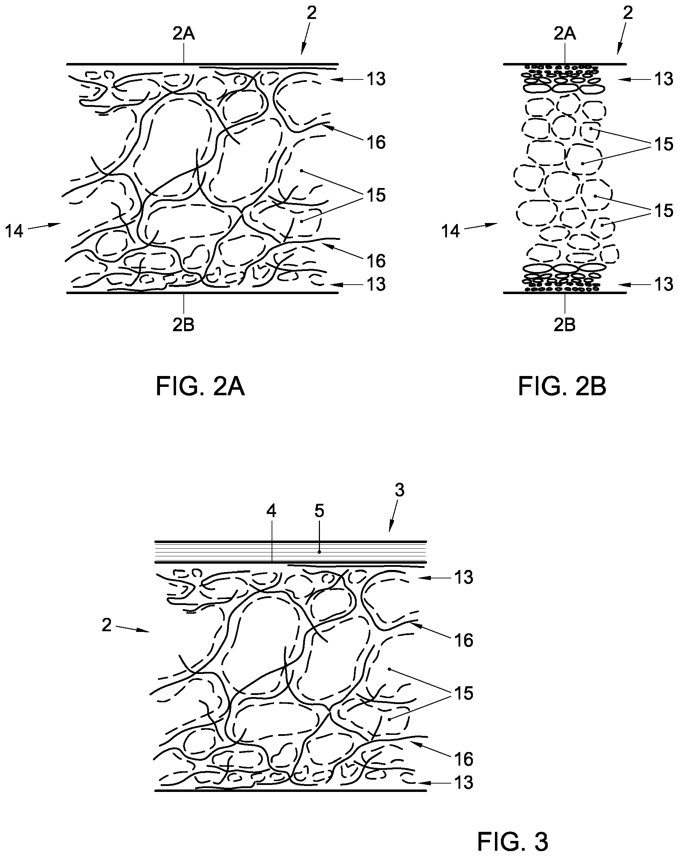

The injection-moulded product 1 has a wall 2 with a skin 13, preferably on opposite sides 2A, 2B of the wall 2 and a foamy core 14 which comprises cells 15, for example open cells 15. In Fig. 2A and B, on an enlarged scale, twice a cross section through a wall part is shown. The skin 13 is preferably dimensionally stable and can have a relatively smooth and taut appearance, which can be esthetically advantageous and moreover may enable, for instance, its being printed on, as well as the provision of relief using the or each mould cavity.

In fig. 2A an embodiment is shown in which fibers 16 are incorporated in the wall 2 increasing strength of the material.

In this description, "gelatinization" is understood to mean a change of a natural polymer from a slightly or complete loose granular or comparable granulate form into a cohesive form which may or may not be dry and/or foamed, in which stretched polymers are present which are mutually bonded to a limited extent, if at all. That is to say, a transition occurs from a solid substance, a colloidal solution or suspension to a more homogeneous fluid mass. Depending on the polymers used, "gelatinization" should therefore be understood to include, for instance, gelling, gellating and the like.

In foamed products where only gelatinization occurs, as a result of gas evolution, bubbles are formed in the mass to be foamed, substantially after gelatinization. This process occurs at relatively low temperatures and pressures. Over the entire cross section, such products can have approximately the same structure of relatively small cells with walls of substantially uncross-linked natural polymers.

In this description, "baking" is understood to mean a method in which both gelatinization and cross-linking occur. This may occur at relatively high temperature and/or pressure. As a result, the formation of gas arises relatively soon, so that bubbles are already formed prior to or during gelatinization. As a result of inter alia the high pressure adjacent strongly heated parts, the polymers cross-link quickly when using a mould or like baking form with a temperature at or above the baking temperature.

These baked products can have a core with relatively large cells, enclosed between skin parts with relatively small cells. By regulating the composition of the suspension and/or the heating conditions and pressure inside the mould the size of the cells and whether they are predominantly open or closed or a mixture thereof can be controlled.

Since the mould is heated, the temperatures in the mould can be properly controlled, both for the mould as a whole and for each separate portion thereof. As a result, products can be manufactured with different and varying wall thicknesses and with different mechanical properties. In fact, by heating more or less and/or for a longer or shorter period and adjusting, for instance, the pressure, for instance the extent of cross-linkage of the polymers can be controlled locally, so that the mechanical and physical properties are influenced. All this can be simply determined by those skilled in the art.

Fig. 2A and B show schematically in cross section a part of a product 1 made from a natural polymer based suspension, such as a starch based suspension, for example a product 1 made of PaperFoam® using an apparatus 20 of fig. 1. During the heating in the injection mould gelatinization and baking of the material will be achieved, in which water and/or other blowing agents evaporate at least in part, blowing bubbles in the material which results in a cell structure of the relevant wall part 2 as for example shown in fig. 2A or 2B. In fig. 2A a wall part 2 having a substantially open cell structure is shown, in which fibers 16, preferably natural fibers 16 have been incorporated. In fig. 2B a similar cross section of a wall part 2 of a product 1 is shown in which at least part of the cells 15 are closes cells. Products 1 with the same or similar wall structures can also be obtained differently, for example by forming products 1 in a platen set, similar to making waffles.

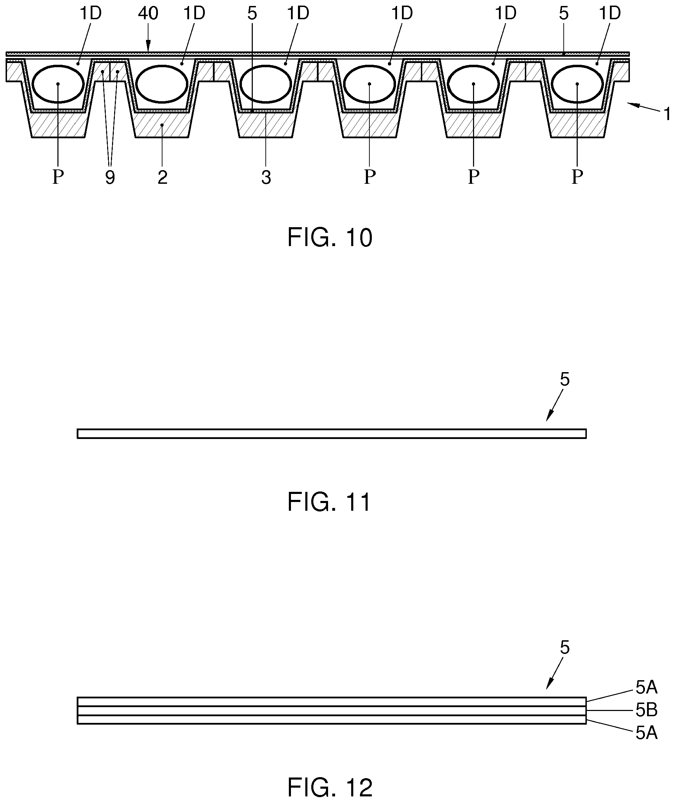

Fig. 3 shows schematically in cross section again a wall part 2 of a product, similar to fig. 2A or 2B, wherein a coating 3 is provided on a surface 4 of the product 1. The coating 3 is provided by a foil or laminate 5, as is also schematically shown in fig. 11 and 12. In general the coating 3 is provided by pressure forming the foil or laminate 5 directly on said surface 4. The coating 3 is preferably adhered to the surface or part thereof, as will be explained here after.

In this description foil or laminate has to be understood as at least including film or laminates of foil and/or film. Film can be understood as a synonym of or as a class of foil, especially a thin foil.

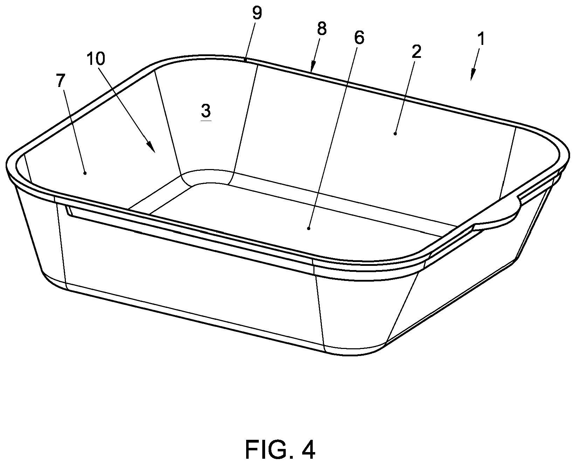

Fig. 4 shows in perspective view a product 1 shaped as a tray. The products 1 such as but not limited to a tray has a relatively thin wall, for example a few millimeters or less, which may be relatively even across the product. The product 1 in this embodiment has a bottom 6 and a peripheral wall 7, which at a top edge 8 opposite the bottom 6 is provided with a flange 9. The inner surface 10 of the bottom 6 and wall 7 in this embodiment is provided with the coating 3. The coating 3 may also extend over the flange 9. The coating 3 may have advantageous properties. The coating 3 can be fluid tight, scratch resistant, flexible, smooth, it can have food grade properties and it can be printable, writeable. The coating 3 can be sealable, for example heat sealable. The coating 3 can be tearable or tear resistant. The coating 3 can be flexible.

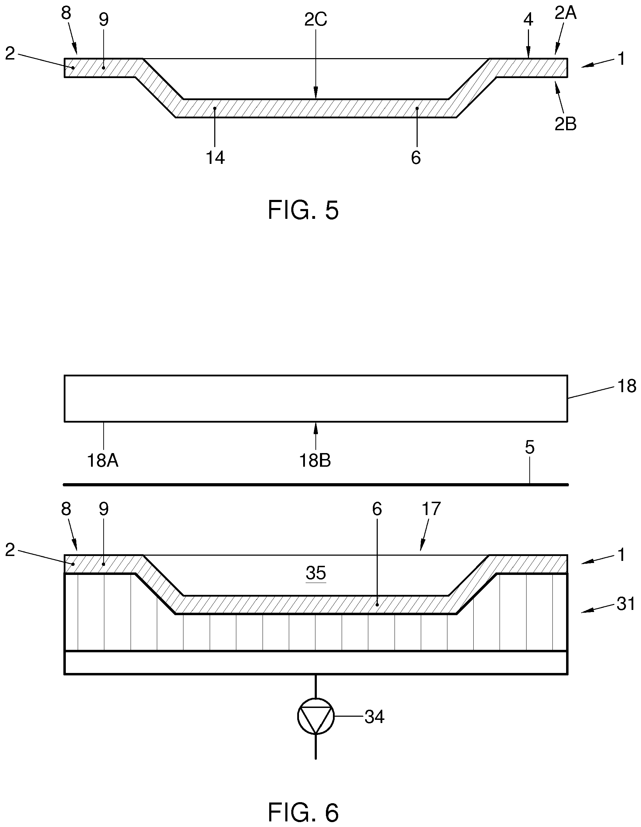

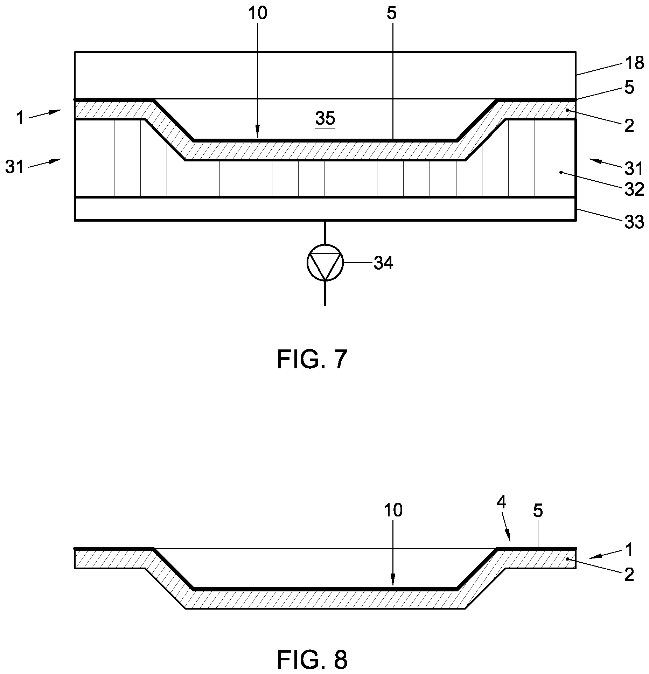

Fig. 5 - 8 shows a series of steps in a method for coating a product 1. Fig. 5 shows the product 1, in cross section, for example made with an apparatus of fig. 1. Fig. 6 shows the product 1 supported by a mold or last 31 which is formed such that it supports at least a relevant part of the product, at least wall parts 2 having a cell structure, such as for example an open cell structure as for example shown in fig. 2A or 2B. Above the opposite, open side 17 a foil or laminate 5 is positioned. The foil or laminate can be heated by a heating head 18, for example by IR heaters, for making the foil or laminate 5 substantially plastically deformable, such as known in thermoforming. Fig. 7 shows the foil or laminate 5 clamped between an edge 8 or flange 9 of the product 1 and an edge 18A of the heating head 18. In this position the foil or laminate 5 is held close to or pressed against the edge 8 or flange 9 whereas the heating surface 18B of the heating head 18 is kept at a minimum distance from the foil or laminate 5, in order to prevent overheating. In the mould or last 31 air channels 32 are provided which extend between an air chamber 33 below the mould or last 31 and a space 35 between the last or mould 31 and the foil or laminate 5. A pump 34 is connected to the air chamber 33. Fig. 8 shows the laminate or foil 5 sucked against the inner surface 10 of the product 1 by sucking through the chamber 33 and channels 32 out of said space 35. The air is sucked through the wall 2 or at least through wall parts 2 having an at least partly open cell structure. The foil or laminate 5 is thus pressure formed over said wall of said product by at least drawing air through said wall, especially through said at least one portion having an at least partly open cell structure, thereby reducing pressure between said foil or laminate and the wall part. As is shown in fig. 8 in cross section the foil or laminate 5 is deformed such that it covers the inside surface 10 of the wall 2 of the product 1.

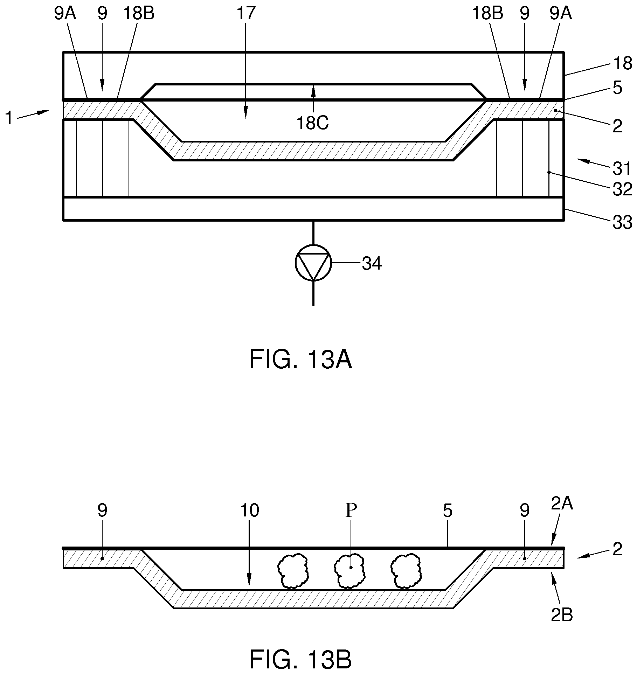

Fig. 13A and B schematically show an alternative embodiment of the invention, in which a foil or laminate 5 has been provided on the product 1 as a top foil 5, coating at least the edge or flange 9. In this embodiment the product 1 again is shown as a tray shaped having an edge or flange 9. The foil or laminate 5 in this embodiment has only been connected to the edge or flange 9, extending over the further product 1 at a distance from the surface 10 of the relevant part of the wall 2 and possibly over items P resting on said product 1. The foil or laminate 5 in this embodiment can for example be provided directly on the wall 2, especially the relevant surface 9A of the edge or flange 9 or part thereof, or can be provided as a top foil sealed against a further foil or laminate 5 provided on the surface 10 of the product 1 as discussed in relation to e.g. fig. 5 to 8, 9 or 10. As can be seen in fig. 13A in this embodiment the foil or laminate 5 is placed substantially flat over the product 1, resting on the edge or flange 9. The moulding apparatus 18 is provided over it, with a heating surface 18B extending only along the periphery, in a position corresponding to the edge or flange 9, leaving a central portion 18C free from heating. At the opposite side of the product 1, in fig. 13A below it, part of a vacuum forming apparatus is provided comprising the mould or last 31, with suction channels 32 again extending only in a peripheral portion corresponding to the edge or flange 9. Thus the foil or laminate 5 will be sucked and/or pressed onto the surface portion 9A of the edge or flange 9, not onto a central portion 2C of the product on which for example items can rest. The foil or laminate may be a release cover. As discussed, the product 1 may be provided with a coating 3 in a first step, as for example shown and discussed with reference to fig. 3 - 9, and then in a second step be provided with a top foil 5, as for example discussed and shown in fig. 13A and B.

It should be noted that in an alternative embodiment the central portion may also be deformed plastically, for example by heating and sucking, without adhering it to the central portion 2C, for example by applying reduced pressure, by not wetting the relevant portion of the foil or laminate or the central portion 2C.

In stead of or additional to heating and/or wetting an adhesive could be added to the interface between the foil or laminate and the product surface, for example a heat or pressure activated adhesive, for further adhering the foil or laminate to the product.

Fig. 11 and 12 show a foil 5 and a laminate 5 respectively. The foil 5 can be a single layer plastic foil, for example a flexible plastic foil. The foil 5 can be a biodegradable foil 5. In embodiments the product wall and the foil or laminate, preferably both, can be made of biodegradable material or materials. Part of the foil or of at least one outer layer of the laminate can be water soluble.

The foil 5 can for example be formed by or comprise at least a layer of biodegradable aliphatic-aromatic (co)polyester based material, a polylactic, cellulose, lignin, starch and/or PHA based material, a material comprising 1.4-butanediol, adipic acid and/or terephtalic acid monomers in polymer chains. Such at least one layer can for example comprise or be formed by a polybutyrate (PBAT), which is for example marketed under the tradename Ecoflex®, a trademark of BASF, and/or an EVOH based material.

The foil or laminate is adhered to at least part of the wall, prior to or during pressure forming. The foil or laminate can be adhered to said wall by chemical bonding and/or by mechanical bonding. The bonding can be obtained for example by a bonding agent applied to one or both of the product 1 and the foil 5 or laminate 5. The bonding can be achieved prior to or during pressure forming.

As indicated, a foil or laminate can be formed by a film or laminate of foils and/or films, which may also be provided as sheets.

In embodiments a foil 5 can be used, for example as shown in fig. 11, of which surface can be at least partly soluble, for example in water or ethanol. In embodiments a laminate can be used of at least two superimposed layers 5A, 5B of plastic material, as shown in fig. 12. At least an outer layer 5A can be made of a water soluble material, such as for example PVOH or EVOH, whereas another or the other layer can be made of a different material, such as for example PET, PEF, PLA, Cellophane, PE, PP or PBAT or another suitable plastic material.

Without wanting to be bound to any theory it appears that by using a foil or a laminate with an outer layer of PBAT or similar biodegradable (co)polyester or other biodegradable plastics which is heated to become more flexible sufficient for thermo-vacuumforming, when the foil 5 is pressed against the product surface, especially when having a cell structure, such as PaperFoam®, the said foil or laminate will at least partly chemically bond to the product. When using a soluble foil or layer in a laminate, it has been found that by wetting the foil or layer and/or the surface of the product to be coated, part of the relevant foil or layer will dissolve and will led to a chemical and/or mechanical bonding of the foil or laminate to the surface of the product. Without wanting to be bound to any theory it appears that the plastic of the foil or layer will be allowed to be pressed into or flow into the inter cellular spaces between the cells and/or into the cells in the wall of the product. When drying out or when the solvent has evaporated it will mean a strong bond between the foil or laminate and the product. The said wetting can comprise applying at least one of water and a solvent, especially ethanol or a solvent comprising ethanol, or a mixture of water and such solvent. In embodiments said wetting can for example be done such that at least a surface layer of the relevant wall part and/or a surface layer of the foil or laminate at least partly dissolves or liquidifies, such that when pressed together the foil or laminate adheres to the wall.

As discussed with reference to the drawings examples of an assembly are disclosed for coating a product, comprising a pressure forming unit, a mould or last and a foil or laminate. The product has a wall part having at least partly a cell structure, preferably at least partly an open cell structure, and wherein the product fits in/and or on the last or mould, such that at least the part of the wall having at least partly the cell structure is supported by said last or mould. The pressure forming unit comprises a suction device for sucking air through and/or along said part of the wall having said cell structure and preferably through and/or along said last or mould supporting said wall portion.

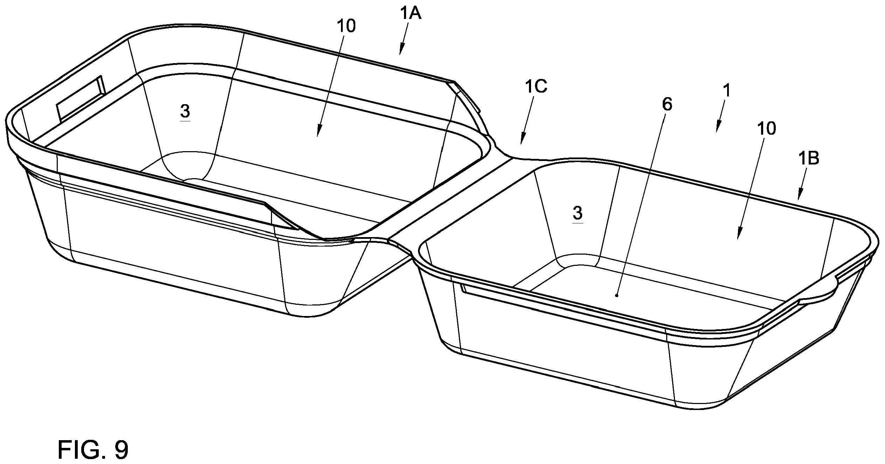

Fig. 9 schematically shows a clam shell made of a biodegradable material such as PaperFoam®, wherein an inner surface of both halves 1A, 1B are coated by a foil or laminate 5 as discussed. The coating preferably is food grade and/or FDA approved, and can for example be water and grease resistant. In embodiments the two halves can be interconnected by a hinge, especially a living hinge 1C. In the same or other embodiments the coating 3 formed by the foil or laminate 5 can be flexible and can form part of or the entire hinge. Other containers or products having multiple parts which should be flexibly connected could be made in the same or a similar manner, having a similar living hinge.

Fig. 10 shows schematically in cross section a product 1 according to the disclosure, comprising multiple pockets 1D and a coating 3, especially a pressure formed coating 3 formed by a foil or laminate 5 as discussed. In this embodiment in each pocket 1D a natural product P or an artefact P can be stored and packaged, for example a seed or a pill. In such embodiments the coating can be sealable, such as heat sealable such that a further layer of foil or laminate 40, which can be made of the same or different materials as the foil 5 or laminate 5 with which the product 1 has been coated can be sealed against said coating, closing off each pocket 1D.

In embodiments seeds P can be packed in a product 1 as shown for example in fig. 10, such that the product 1 can be introduced into the ground or other growing medium, allowing the seeds to hatch, plants emerging being allowed to grow out of the package 1, wherein preferably the product 1, more preferably the product 1 and the closing foil or laminate 5, 40 are biodegradable and will provide for nutrients to the plants.

Examples of batter that can be used for forming products according to this disclosure can for example be found in WO96/30186 or WO98/13184. Purely by way of example an embodiment is further discussed here below as an example. As indicated, this should by no means be understood as limiting for the disclosure.

### Examples

1000 g potato starch was introduced into a Hobart mixer and under stirring at low speed (position 1) successively 2 g Kelzan S, 2 g hydroxyl apatite, 75 g China clay Spes and 75 g Hydrocarb 90 were added thereto. After all components had been added, mixing occurred for another 15 minutes (position 1). This mixture was introduced into a priorly measured and stirred composition of 1150 g mains water and 22 g rapeseed oil.

After all components had been stirred (position 2) to form a liquid batter, this was introduced into a supply device of an adapted injection-moulding machine. The injection-moulding machine used is of the type EPS-10, of the firm Thermoware of Barneveld. The injection-moulding machine used comprised a mould with ten mould cavities for forming trays, each tray having a size of 150 ^{∗} 75 ^{∗} 25 mm (L ^{∗} B ^{∗} H) and a wall thickness of 2.5 mm. The injection mould comprised electric heating elements and a plunger-injection device with a shut-off thermally uncoupled from the mould. Per mould cavity, approximately 15 cc batter was injected under a pressure of 2 bar and at a temperature of 20°C.

The mould was heated to 210 C, with a temperature tolerance of between 200°C and 220°C and the mould was closed with a force of 5 kN per mould cavity. The mould was closed for 120 s and maintained at the required temperature, so that each mould cavity was filled entirely with foamed product. During heating, 98% of the water escaped, substantially in the form of vapour, via vents in the mould, with the water functioning as blowing agent. After 120 s the mould was opened and the injection moulded products were pressed from the mould cavities using the ejectors. The thus formed products were directly ready for use.

Each product had a core of a thickness of approximately 2.4 mm, with an increased density towards opposite side surfaces. Each product had a moisture content of approximately 2% and a weight of 8 g.

In a first example the product 1 as described here above, shaped as a tray as shown in fig. 4 was coated on an inside surface by pressure moulding, especially vacuum-thermo forming as described here above in relation to fig. 5 - 8, using a PBAT foil (Ecoflex® F blend C1200 blown film) having a thickness of 50µm. Product properties of the foil used are given here below in table 1.

**Table 1**

| **Typical properties of ecoflex® F Blend C1200 blown film, 50 µm** | | | | |
|---|---|---|---|---|
| **Property** | **Unit** | **Test Method** | ***ecoflex*® *F Blend C1200*** | **Lupolen® 2420 F** |
| **Transparency** | % | ASTM D 1003 | *82* | 89 |
| **Tensile strength** | N/mm² | ISO 527 | *35*/*44* | 26/20 |
| **Ultimate strength** | N/mm² | ISO 527 | *36*/*45* | - |
| **Ultimate Elongation** | % | ISO 527 | *560*/*710* | 300/600 |
| **Failure Energy (Dyna Test)** | J/mm | DIN 53373 | *24* | 5.5 |
| **Permeation rates: Oxygen (23°C, dry)** | cm³/(m²*d*bar) | ASTMD 3985 | *1200* | 2900 |
| **Water vapour (23°C, 85 % r.h.)** | g/(m²*d) | ASTMF-1249 | *135* | 1.7 |

After cooling of the product with the foil coating the foil was plastically deformed, fitting snugly against the surface of the product and firmly attached to the inside surface of the tray, and to the flange 9 thereof.

A tray as described was taken and a sealing foil was heat sealed over the open top side by heat sealing it to the foil coating on the flange. This packaging was found to be substantially air and moisture tight. The permeation for oxygen, measured after drying at 23°C was a maximum of 1200cm³/(m²*d*bar) wherein d is the thickness of the foil. The permeation to water vapor was a maximum of, measured at 23°C and 85% RH, 135 g/(m²*d). The packaging including the foil was biodegradable.

In a second example a product was formed according to fig. 10. A laminate 5 was pressure formed, especially vacuum-thermo formed, i.e. vacuum formed against the product during or after heating the laminate or foil, as described here above in relation to fig. 5 - 8. The foil coating covered all pockets of the product. Individual seeds were introduced in the pockets, where after a closing foil was sealed over the pockets. The closing foil was sealed to the coating along a peripheral edge or flange 9 and along the edges of the pockets, thereby closing off all pockets. The laminate 5 comprises an upper layer of PE and a lower layer of POVH, which was wetted prior to pressure forming it onto the product. This adhered the laminate to the product.

The invention is by no means limited to the embodiments as shown and/or described in this description. Many variations thereof are possible within the scope of the claims, including at least all combinations of parts and elements of the embodiments and parts thereof shown, in any combination or permutation.

These and other alterations and modifications are supposed to be disclosed within the scope of the claims.

## Claims

1. Method for coating a product (1), the product (1) made of a suspension containing starch, which has been baked in a mould (23), heated such that the starch is at least gelatinized such that cross linking of at least natural polymers in the material is obtained, the product (1) having a wall (2) formed by at least a portion having at least partly a cell structure, at least one portion having an at least partly open cell structure, wherein the wall part (2) has a core (14) with relatively large cells, enclosed between skin parts (13) with relatively small cells (15), wherein a foil or foil laminate (5) is pressure formed over at least a part of at least one side of said wall (2), said foil or at least one layer of said laminate (5) forming a coating of said part of the wall (2).

2. Method according to claim 1, wherein the foil or laminate (5) is pressure formed over said wall (2) of said product (1) by at least drawing air through said wall (2), especially through said at least one portion having an at least partly open cell structure, thereby reducing pressure between said foil or laminate (5) and the wall part (2).

3. Method according to claim 1 or 2, wherein the foil or laminate (5) is adhered to at least part of the wall (2), prior to or during pressure forming, wherein the foil or laminate (5) preferably is adhered to said wall by chemical bonding, and/or by mechanical bonding.

4. Method according to any one of the preceding claims, wherein at least one of the foil or laminate (5) and the wall (2) is at least partly wetted prior to or during pressure forming, wherein said wetting preferably comprises applying at least one of water and a solvent, especially ethanol or a solvent comprising ethanol, or a mixture of water and a solvent.

5. Method according to claim 4, wherein said wetting is done such that at least a surface layer of the relevant wall part (2) and/or a surface layer of the foil or laminate (5) at least partly dissolves or liquidifies, such that when pressed together the foil or laminate (5) adheres to the wall (2).

6. Method according to any one of the previous claims, wherein the foil or laminate (5) is bonded to the wall (2) prior to or during pressure forming by applying a bonding agent.

7. Method according to any one of the previous claims, wherein the product (1) is supported by a last or mould.

8. Method according to any one of the previous claims, wherein at least one of the product wall (2) and the foil or laminate (5), preferably both, is made of biodegradable material of materials.

9. Method according to any one of the previous claims, wherein part of the foil or of at least one outer layer of the laminate (5) is water soluble.

10. Method according to any one of the previous claims, wherein the foil or laminate (5) is formed by or comprises at least a layer of biodegradable aliphatic-aromatic (co)polyester based material, a polylactic, cellulose, lignin, starch and/or PHA based material, a material comprising 1.4-butanediol, adipic acid and/or terephtalic acid monomers in polymer chains and/or an EVOH based material.

11. Method according to any one of the previous claims, wherein a combined thermoforming and vacuum forming is applied as pressure forming.

12. Product (1) having a wall (2) with at least partly a cell structure, especially an open cell structure, baked using a suspension of at least starch, such that cross linking of natural polymers of the suspension has occurred, wherein the wall part (2) has a core (14) with relatively large cells, enclosed between skin parts (13) with relatively small cells, and a coating made of a foil or laminate (5) has been pressure formed over at least part of said open celled wall part (2), preferably pressed into inter cellular spaces between the cells and/or into the cells in the wall of the product.

13. Product according to claim 12, wherein the coating (5) at least partly connects two parts of the product (1), especially hinging.

14. Product according to claim 12 or 13, wherein a cover foil is attached to the coating, especially sealed against the coating (5), preferably closing off at least one space or pocket of said product.

15. Assembly for coating a product, comprising a product and a pressure forming unit, a mould or last and a foil or laminate (5), wherein the product has a wall part (2) having at least partly a cell structure, preferably at least partly an open cell structure, baked using a suspension of at least starch, such that cross linking of natural polymers of the suspension has occurred, wherein the wall part (2) has a core (14) with relatively large cells, enclosed between skin parts (13) with relatively small cells,and wherein the product (1) fits in/and or on the last or mould (31), such that at least the part of the wall (2) having at least partly the cell structure is supported by said last or mould (31), and wherein the pressure forming unit comprises a suction device for sucking air through and/or along said part of the wall (2) having said cell structure and preferably through and/or along said last or mould (31) supporting said wall portion (2).

## Patentansprüche

1. Verfahren zum Beschichten eines Produkts (1), wobei das Produkt (1) aus einer stärkehaltigen Suspension hergestellt ist, die in einer Form (23) gebrannt wurde, die so erhitzt wird, dass die Stärke wenigstens gelatiniert wird, so dass eine Vernetzung von wenigstens natürlichen Polymeren in dem Material erhalten wird, wobei das Produkt (1) eine Wand (2) aufweist, die aus wenigstens einem Abschnitt gebildet ist, der wenigstens teilweise eine Zellstruktur aufweist, wobei wenigstens ein Abschnitt eine wenigstens teilweise offene Zellstruktur aufweist, wobei der Wandteil (2) einen Kern (14) mit relativ großen Zellen aufweist, der zwischen Hautteilen (13) mit relativ kleinen Zellen (15) eingeschlossen ist, wobei eine Folie oder ein Folienlaminat (5) über wenigstens einen Teil von wenigstens einer Seite der Wand (2) druckgeformt ist, wobei die Folie oder wenigstens eine Schicht des Laminats (5) eine Beschichtung des Teils der Wand (2) bildet.

2. Verfahren nach Anspruch 1, wobei die Folie oder das Laminat (5) über die Wand (2) des Produkts (1) durch wenigstens Ziehen von Luft durch die Wand (2) druckgeformt wird, insbesondere durch den wenigstens einen Abschnitt, der eine wenigstens teilweise offene Zellstruktur aufweist, wodurch der Druck zwischen der Folie oder dem Laminat (5) und dem Wandteil (2) verringert wird.

3. Verfahren nach Anspruch 1 oder 2, wobei die Folie oder das Laminat (5) vor oder während des Druckformens an wenigstens einem Teil der Wand (2) haften, wobei die Folie oder das Laminat (5) vorzugsweise an der Wand durch chemische Bindung und/oder durch mechanische Bindung haften.

4. Verfahren nach einem der vorhergehenden Ansprüche, wobei wenigstens eines von der Folie oder dem Laminat (5) und die Wand (2) vor oder während des Druckformens wenigstens teilweise benetzt werden, wobei das Benetzen vorzugsweise das Aufbringen von wenigstens einem von Wasser und einem Lösungsmittel, insbesondere Ethanol oder einem Lösungsmittel, das Ethanol umfasst, oder einer Mischung aus Wasser und einem Lösungsmittel umfasst.

5. Verfahren nach Anspruch 4, wobei das Benetzen so durchgeführt wird, das sich wenigstens eine Oberflächenschicht des relevanten Wandteils (2) und/oder eine Oberflächenschicht der Folie oder des Laminats (5) wenigstens teilweise auflöst oder verflüssigt, so dass die Folie oder das Laminat beim Zusammendrücken (5) an der Wand (2) haftet.

6. Verfahren nach einem der vorhergehenden Ansprüche, wobei die Folie oder das Laminat (5) vor oder während des Druckformens durch Aufbringen eines Bindemittels an die Wand (2) gebunden wird.

7. Verfahren nach einem der vorhergehenden Ansprüche, wobei das Produkt (1) von einem Leisten oder einer Form getragen wird.

8. Verfahren nach einem der vorhergehenden Ansprüche, wobei wenigstens eine der Produktwände (2) und die Folie oder das Laminat (5), vorzugsweise beide, aus biologisch abbaubarem Material von Materialien hergestellt sind.

9. Verfahren nach einem der vorhergehenden Ansprüche, wobei ein Teil der Folie oder wenigstens einer äußeren Schicht des Laminats (5) wasserlöslich ist.

10. Verfahren nach einem der vorhergehenden Ansprüche, wobei die Folie oder das Laminat (5) durch wenigstens eine Schicht aus biologisch abbaubarem aliphatisch-aromatischem (co)polyester-basiertem Material, einer Polymilchsäure, Cellulose, Lignin, Stärke und/oder einem Material auf PHA-Basis gebildet wird oder diese umfasst, wobei ein Material 1,4-Butandiol-, Adipinsäure- und/oder Terephthalsäuremonomere in Polymerketten und/oder ein Material auf EVOH-Basis umfasst.

11. Verfahren nach einem der vorhergehenden Ansprüche, wobei ein kombiniertes Thermoformen und Vakuumformen als Druckformen angewendet wird.

12. Produkt (1), das eine Wand (2) mit wenigstens teilweise einer Zellstruktur aufweist, insbesondere einer offenen Zellstruktur, gebrannt unter Verwendung einer Suspension von wenigstens Stärke, so dass eine Vernetzung von natürlichen Polymeren der Suspension aufgetreten ist, wobei der Wandteil (2) einen Kern (14) mit relativ großen Zellen aufweist, der zwischen Hautteilen (13) mit relativ kleinen Zellen eingeschlossen ist, und eine Beschichtung aus einer Folie oder einem Laminat (5) über wenigstens einen Teil des Wandteils (2) mit offenen Zellen druckgeformt wurde, die vorzugsweise in Zwischenräume zwischen den Zellen und/oder in die Zellen in der Wand des Produkts gedrückt wurde.

13. Produkt nach Anspruch 12, wobei die Beschichtung (5) wenigstens teilweise zwei Teile des Produkts (1) verbindet, insbesondere scharniert.

14. Produkt nach Anspruch 12 oder 13, wobei eine Abdeckfolie an der Beschichtung angebracht ist, die insbesondere gegen die Beschichtung (5) abgedichtet ist und vorzugsweise wenigstens einen Raum oder eine Tasche des Produkts verschließt.

15. Anordnung zum Beschichten eines Produkts, umfassend ein Produkt und eine Druckformeinheit, eine Form oder einen Leisten und eine Folie oder ein Laminat (5), wobei das Produkt einen Wandteil (2) aufweist, der wenigstens teilweise eine Zellstruktur aufweist, vorzugsweise wenigstens teilweise eine offene Zellstruktur, die unter Verwendung einer Suspension von wenigstens Stärke gebrannt wurde, so dass eine Vernetzung von natürlichen Polymeren der Suspension aufgetreten ist, wobei der Wandteil (2) einen Kern (14) mit relativ großen Zellen aufweist, der zwischen Hautteilen (13) mit relativ kleinen Zellen eingeschlossen ist, und wobei das Produkt (1) in/und oder auf den Leisten oder die Form (31) passt, so dass wenigstens der Teil der Wand (2), der wenigstens teilweise die Zellstruktur aufweist, von dem Leisten oder der Form (31) getragen wird, und wobei die Druckformeinheit eine Saugvorrichtung zum Ansaugen von Luft durch und/oder entlang des Teils der Wand (2) mit der Zellstruktur und vorzugsweise durch und/oder entlang des Leistens oder der Form (31) umfasst, der oder die den Wandabschnitt (2) trägt.

## Revendications

1. Procédé pour revêtir un produit (1), le produit (1) étant fait d'une suspension contenant de l'amidon, qui a été cuite dans un moule (23), chauffée de façon que l'amidon soit au moins gélatinisé de sorte que la réticulation d'au moins des polymères naturels dans le matériau soit obtenue, le produit (1) ayant une paroi (2) formée par au moins une partie ayant au moins partiellement une structure alvéolaire, au moins une partie ayant une structure alvéolaire au moins partiellement ouverte, dans lequel la partie de paroi (2) a un cœur (14) avec des alvéoles relativement grosses, enfermées entre des parties de peau (13) avec des alvéoles relativement petites (15), dans lequel une feuille ou un stratifié de feuilles (5) est formé sous pression sur au moins une partie d'au moins un côté de ladite paroi (2), ladite feuille ou ladite au moins une couche dudit stratifié (5) formant un revêtement de ladite partie de la paroi (2).

2. Procédé selon la revendication 1, dans lequel la feuille ou le stratifié (5) est formé sous pression sur ladite paroi (2) dudit produit (1) par au moins une aspiration d'air à travers ladite paroi (2), en particulier à travers ladite au moins une partie ayant une structure alvéolaire au moins partiellement ouverte, ce qui réduit ainsi la pression entre ladite feuille ou ledit stratifié (5) et la partie de paroi (2) .

3. Procédé selon la revendication 1 ou 2, dans lequel la feuille ou le stratifié (5) adhère à au moins une partie de la paroi (2), avant ou pendant le formage sous pression, dans lequel la feuille ou le stratifié (5) de préférence adhère à ladite paroi par collage chimique et/ou par collage mécanique.

4. Procédé selon l'une quelconque des revendications précédentes, dans lequel au moins l'un parmi la feuille ou le stratifié (5) et la paroi (2) est au moins partiellement mouillé avant ou pendant le formage sous pression, dans lequel ledit mouillage comprend de préférence l'application d'au moins l'un parmi l'eau et un solvant, en particulier l'éthanol ou un solvant comprenant de l'éthanol, ou un mélange d'eau et d'un solvant.

5. Procédé selon la revendication 4, dans lequel ledit mouillage est effectué de façon qu'au moins une couche de surface de la partie de paroi concernée (2) et/ou une couche de surface de la feuille ou du stratifié (5) se dissolve et/ou se liquéfie au moins partiellement, de sorte que, lorsqu'ils sont pressés ensemble, la feuille ou le stratifié (5) adhère à la paroi (2).

6. Procédé selon l'une quelconque des revendications précédentes, dans lequel la feuille ou le stratifié (5) est collé à la paroi (2) avant ou pendant le formage sous pression par application d'un agent collant.

7. Procédé selon l'une quelconque des revendications précédentes, dans lequel le produit (1) est supporté par une forme ou un moule.

8. Procédé selon l'une quelconque des revendications précédentes, dans lequel au moins l'un parmi la paroi de produit (2) et la feuille ou le stratifié (5), de préférence les deux, sont faits d'un ou plusieurs matériaux biodégradables.

9. Procédé selon l'une quelconque des revendications précédentes, dans lequel une partie de la feuille ou d'au moins une couche extérieure du stratifié (5) est soluble dans l'eau.

10. Procédé selon l'une quelconque des revendications précédentes, dans lequel la feuille ou le stratifié (5) est formé par ou comprend au moins une couche de matériau à base de (co)polyester aliphatique-aromatique biodégradable, d'un matériau polylactique ou à base de cellulose, de lignine, d'amidon et/ou de PHA, d'un matériau comprenant des monomères de 1,4-butanediol, d'acide adipique et/ou d'acide téréphtalique dans les chaînes polymères et/ou d'un matériau à base d'EVOH.

11. Procédé selon l'une quelconque des revendications précédentes, dans lequel un thermoformage et un formage sous vide combinés sont appliqués en tant que formage sous pression.

12. Produit (1) ayant une paroi (2) avec au moins partiellement une structure alvéolaire, en particulier une structure alvéolaire ouverte, cuit par utilisation d'une suspension au moins d'amidon, de façon qu'une réticulation de polymères naturels de la suspension ait eu lieu, dans lequel la partie de paroi (2) a un cœur (14) avec des alvéoles relativement grosses, enfermées entre des parties de peau (13) avec des alvéoles relativement petites, et un revêtement fait d'une feuille ou d'un stratifié (5) qui a été formé sous pression sur au moins une partie de ladite partie de paroi alvéolaire ouverte (2), de préférence pressé dans les espaces inter-alvéolaires entre les alvéoles et/ou dans les alvéoles dans la paroi du produit.

13. Produit selon la revendication 12, dans lequel le revêtement (5) connecte au moins partiellement deux parties du produit (1), en particulier en charnière.

14. Produit selon la revendication 12 ou 13, dans lequel une feuille de recouvrement est attachée au revêtement, en particulier scellée contre le revêtement (5), de préférence en fermant au moins un espace ou une poche dudit produit.

15. Assemblage pour revêtir un produit, comprenant un produit et une unité de formage sous pression, un moule ou une forme, et une feuille ou un stratifié (5), dans lequel le produit a une partie de paroi (2) ayant au moins partiellement une structure alvéolaire, de préférence au moins partiellement une structure alvéolaire ouverte, cuit par utilisation d'une suspension au moins d'amidon, de façon qu'une réticulation de polymères naturels de la suspension ait eu lieu, dans lequel la partie de paroi (2) a un cœur (14) avec des alvéoles relativement grosses, enfermées entre des parties de peau (13) avec des alvéoles relativement petites, et dans lequel le produit (1) s'ajuste dans et/ou sur la forme ou le moule (31), de façon qu'au moins la partie de la paroi (2) ayant au moins partiellement la structure alvéolaire soit supportée par ladite forme ou ledit moule (31), et dans lequel l'unité de formage sous pression comprend un dispositif d'aspiration pour aspirer de l'air à travers et/ou le long de ladite paroi de la paroi (2) ayant ladite structure alvéolaire et de préférence à travers et/ou le long de ladite forme ou dudit moule (31) supportant ladite partie de paroi (2).
